# FASCICULE DE BREVET EUROPEEN

(11) **EP 1 352 006 B1**
(45) Date de publication et mention de la délivrance du brevet: **27.06.2007**
(21) Numéro de dépôt: 01996571.4
(22) Date de dépôt: 20.11.2001
(51) Int. Cl.: C08G 18/16, C08G 18/02

(54) **PROCEDE DE DIMERISATION CATALYTIQUE D'ISOCYANATES**
VERFAHREN ZUR KATALYTISCHEN DIMERISIERUNG VON ISOCYANATEN
METHOD FOR CATALYTIC DIMERIZATION OF ISOCYANATES

(30) Priorité: 20.11.2000 FR 0014965; 20.11.2000 FR 0014966
(43) Date de publication de la demande: 15.10.2003
(73) Titulaire: RHODIA CHIMIE, 92512 Boulogne Billancourt Cedex (FR)
(72) Inventeur: Bernard, Jean-Marie, Saint-Laurent D'Agny, 69440 Mornant (FR)
(74) Mandataire: Colombet, Alain André
(86) Numéro de dépôt international: PCT/FR2001/003648
(87) Numéro de publication internationale: WO 2002/040567

(56) Documents cités:
- EP-A- 0 896 973
- US-A- 4 031 036
- US-A- 4 476 054
- US-A- 5 202 358
- US-A- 5 461 135
- DATABASE WPI Week 8950 Derwent Publications Ltd., London, GB; AN 1989-367654 XP002174350 "Polyurethane with good mechanical properties" & JP 01 275616 A (KYOWA YUKA), 6 novembre 1989 (1989-11-06)
- DATABASE WPI Week 0029 Derwent Publications Ltd., London, GB; AN 2000-333310 XP002174351 "Polyurethane used in soles for safety shoes" & JP 2000 103958 A (KAO), 11 avril 2000 (2000-04-11)

## Description

L'invention a pour objet un procédé de préparation de polyisocyanates oligomères comportant au moins un groupement uretdione par dimérisation d'isocyanates monomères de départ à l'aide de catalyseurs de la famille des super acides.

L'invention a plus particulièrement pour objet un procédé de cyclodimérisation catalytique d'isocyanates monomères, présentant une sélectivité élevée.

Les polyisocyanates contenant des groupes uretdione, connus sous l'appellation "dimères" sont synthétisés par cycloaddition (2 + 2) de deux molécules isocyanates aliphatiques, cycloaliphatiques ou aromatiques.

Alors que les isocyanates aromatiques peuvent se cyclodimériser en l'absence de catalyseur à température ambiante, il est connu que les autres isocyanates nécessitent le recours à des catalyseurs basiques, tels que les trialkylphosphines, les N,N,N',N'-tétra-alkylguanidines, les 1,2-dialkyl-imidazoles, etc.

De manière générale, ces catalyseurs sont cependant peu sélectifs, et, à côté de la réaction de dimérisation, favorisent également la formation de polyisocyanates trimères de structure majoritairement isocyanurate par cyclotrimérisation des isocyanates monomères de départ, aboutissant à la formation de compositions polyisocyanates présentant une proportion plus ou moins importante des composés à groupes isocyanurates à côté des polyisocyanates contenant des groupes uretdione.

Pour remédier au problème de la sélectivité des catalyseurs de dimérisation, il a été proposé de mettre en oeuvre des composés entrant dans les classes génériques des N,N-di-alkylaminopyridines, 4-(N-arylalkyl-N-alkyl)amino-pyridines et tris(N,N-dialkyl)phosphotriamides. Des exemples concrets du premier groupe sont la 4-N,N-diméthyiaminopyddme (désignée par "DMAP"), la 4-pyrrolidinylpyridine, alors qu'un exemple concret du deuxième groupe est la 4-(N-benzyl-N-méthyl)aminopyridine (désignée par "BMAP"), et qu'un exemple concret du troisième groupe est l'hexaméthylphosphotriamide (HMPT).

Ces catalyseurs dérivés des aminopyridines peuvent également être utiles pour des réactions d'acylation ou de formation d'uréthanes. La demande de brevet EP-A1- 0 896 973 divulgue l'utilisation de pentafluorure d'antimoine on de trifluorure de bone comme catalyseurs de dimérisation de groupes isocyanates.

Pour de plus amples informations, on pourra se référer aux travaux de E. F. V. Scriven, Chem. Soc. Rev., 129, (1983) et de G. Hofle et al., Angew. Chem. Int. Ed Engl., 17, 569, (1978).

Les travaux des inventeurs qui ont mené à la présente invention ont permis de mettre en évidence que, de manière inattendue, les composés de la famille des super acides constituaient d'excellents catalyseurs de dimérisation, permettant d'obtenir des polylsocyanates dimères à motif uretdione avec une sélectivité et un rendement élevés.

Par "sélectivité élevée" au sens de l'invention, on entend que les fonctions isocyanates des monomères de départ réagissent majoritairement entre elles pour former des composés présentant des groupes uretdiones. Des composés présentant des groupes isocyanurates peuvent également être formés, mais en quantité minoritaire.

Les composés peuvent présenter un seul groupe uretdione, auquel cas on parlera de "dimères vrais" ou plusieurs groupes uretdione auquel cas on parlera d'oligodimères ou de "polydimères". Les oligodimères peuvent être notamment des bis- ou tris-uretdiones ou des composés lourds présentant plus de trois cycles uretdiones et sont considérés comme des polydimères.

Il n'est toutefois pas exclu et il peut même être avantageux que les composés de l'invention catalysent également la réaction de fonctions isocyanates avec d'autres fonctions réactives avec la fonction isocyanate possédant généralement des fonctions à hydrogène mobile, notamment des fonctions alcool, thiol, etc. Les amines étant dans ce cas non préférées du fait de la protonation du catalyseur de dimérisation par ces dernières.

L'invention a pour objet un procédé de préparation de polyisocyanates par cyclodimérisation de fonctions isocyanates portées par des isocyanates monomères de départ, caractérisé en ce qu'il comprend les étapes de :
a. fourniture d'un milieu réactionnel comprenant des isocyanates monomères de départ, éventuellement en présence d'un solvant ;
b. addition à ce milieu réactionnel d'un catalyseur de (cyclo)dimérisation comprenant un composé de la famille des super acides ;chauffage du milieu réactionnel à une température comprise dans l'intervalle de 0°C à 300°C, avantageusement de 20°C à 200°C jusqu'à obtention du taux de transformation désiré compris entre 1 et 95 %, avantageusement 5 et 50 % des fonctions isocyanates initiales ;
d. éventuellement inactivation ou élimination du catalyseur de réaction ; et
e. éventuellement élimination des monomères n'ayant pas réagi.

Par "composé de la famille des super acides", on entend tout composé, ou mélange de composés, dont la constante d'acidité définie par Hammett est strictement inférieure à -12. Pour la définition de la constante d'acidité selon Hammett, on pourra se reporter avantageusement à l'ouvrage de J. March, Advanced Organic Chemistry, troisième édition, John Wiley and Son, pp 223 sqq.

Ainsi, les super acides utilisés dans la présente invention sont définis comme étant les acides dont la constante d'acidité de Hammett "H" est inférieure strictement à -12 et, à titre d'exemple, sont choisis parmi les acides sulfoniques, les sulfonimides, les sulfonylméthanes, les fluorures de phosphore, les fluorures d'antimoine, les fluorures (et hydrofluorures) de bore, etc., seuls ou en mélange, ainsi que leurs dérivés.

Ainsi, l'acide trifluorométhanesulfonique possède une constante d'acidité H égale à -14, l'acide fluorosuifonique, une constante d'acidité H de -15. Des mélanges de super acides, tel que le mélange FSO₃H/SbF₅ encore appelé "acide magique" permettent d'atteindre des valeurs H encore inférieures, et par exemple -21 dans le cas d'un mélange de 5% de pentafluorure d'antimoine dans l'acide fluorhydrique.

Les catalyseurs de la famille des super acides utilisés dans le procédé de la présente invention sont de plus préférentiellement choisis parmi les super acides qui ne peuvent pas être déshydratés, c'est-à-dire ceux dont la structure chimique ne permet pas leur transformation en anhydride, dans les conditions opératoires des réactions de dimérisation des isocyanates monomères de l'invention.

De tels acides possèdent, généralement au moins un atome d'hydrogène fortement labile ou peuvent favoriser la formation d'au moins un atome d'hydrogène fortement labile dans le milieu réactionnel. La présence de cet atome d'hydrogène fortement labile est de manière générale due à la présence, dans la structure chimique du super acide, d'au moins un atome ou groupement fortement électro-attracteur.

L'atome ou groupement attracteur est de préférence choisi parmi les groupes fonctionnels dont la constante de Hammett σₚ est au moins égale à 0,1. Il est en outre préférable que la composante inductive de σₚ, σᵢ, soit au moins égale à 0,2, avantageusement à 0,3. À cet égard, on se référera à l'ouvrage de J. March, ibid., pp. 242-250, et notamment au tableau 4 de cette section.

Selon une première variante, la présente invention fournit un procédé de cyclodimérisation tel que défini précédemment dans lequel le catalyseur est avantageusement un composé de la famille des super acides comportant au moins un groupement bivalent -Y₁-X-Y₂- lié à un atome ou un groupement électro-attracteur, dans lequel :
- X est choisi parmi NH et C(Q)H ;
- Y₁ et Y₂, identiques ou différents, sont choisis parmi le groupe SO₂ et le groupe CO ;
- Q est choisi parmi :
   * H, Cl, F, Br ,CN ;
   * un radical alkyle ayant de 1 à 30 atomes de carbone ;
   * un radical aryle ou aralkyle ayant de 6 à 30 atomes de carbone ;
   * un groupe R"_{F}, un groupe R"_{F}SO₂-, ou R"_{F}CO-, un groupe R"_{F}CH₂OSO₂- ou R"_{F}CH₂OCO-, et un groupe (R"_{F})₂CHO-SO₂- ou (R"_{F})₂CH₂O-CO- ; R"_{F} étant choisi dans le groupe constitué par le fluor, le chlore, le brome, le groupe -CN, les groupes alkyle, alkényle, haloalkyle, haloalkényle, halocycloalkyle ou halocycloalkényle ayant de 1 à 20, de préférence 1 à 6 atomes de carbone, les groupes cycloalkyle, cycloalkényle, halocycloalkyle ou halocyclo-alkényle ayant de 3 à 30, avantageusement de 3 à 10 atomes de carbone, les groupes aryle, alkylaryle ou haloaryle ayant de 6 à 30, de préférence 6 à 10 atomes de carbone, les groupements perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes ;
   * sous réserve que, lorsque Q représente H, alors Y₁ et Y₂ représentent chacun le groupe -SO₂-.

Avantageusement, le catalyseur comprend un composé de formule (I) :

R_{F}-Y₁-X-Y₂-R'_{F} (I)

dans laquelle :
- X, Y₁ et Y₂ sont tels que définis ci-dessus, et
- R_{F} est choisi parmi R_{F1}, R_{F1}CH₂O-; et (R_{F1})₂CHO- ;
- R_{F1} et R'_{F}, identiques ou différents sont choisis dans le groupe constitué par le fluor, le chlore, le brome, le groupe CN, les groupes alkyle, alkényle, haloalkyle, haloalkényle, halocycloalkyle ou halocycloalkényle ayant de 1 à 20, de préférence 1 à 6 atomes de carbone, les groupes cycloalkyle, cycloalkényle, halocycloalkyle ou halocycloalkényle ayant de 3 à 30, avantageusement de 3 à 10 atomes de carbone, les groupes aryle, alkylaryle ou haloaryle ayant de 6 à 30, de préférence 6 à 10 atomes de carbone, les groupements perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes ou
- l'un de R_{F1} et R'_{F} représente un reste polymère lié à Y₁ ou Y₂ par un groupe espaceur et sous réserve que l'un de R_{F1} et R'_{F} représente un groupe choisi parmi les groupes perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes; ou bien
- R_{F1} et R'_{F} forment ensemble un radical divalent choisi parmi les radicaux alkylènes linéaires perfluorés ou perchlorés ayant de 2 à 20 atomes, avantageusement de 2 à 8 de carbone ; ou bien
- lorsque X représente C(Q)H, R'_{F} et R"_{F} d'une part, et/ou R_{F1} et R"_{F} d'autre part forment ensemble un radical divalent choisi parmi les radicaux alkylènes linéaires ou ramifiés perfluorés ou perchlorés ayant de 2 à 20, avantageusement de 2 à 8 atomes de carbone, et
- sous réserve que lorsque Q représente H, alors Y₁ et Y₂ sont des groupes SO₂.

Comme exemples particulièrement intéressants de composés de formule générale (I), on peut citer les sulfonimides :
- FSO₂NHSO₂R'_{F},
- CF₃SO₂-NH-SO₂R'_{F},
- CF₃CH₂OSO₂NHSO₂R'_{F},
- (CF₃)₂CH-SO₂-NH-SO₂R'_{F}, et
- (CF₃)₂CHOSO₂NHSO₂R'_{F},
dans lesquels le radical R'_{F} est choisi parmi F, CF₃CH₂O, (CF₃)₂CHO, et un groupement perfluoroalkyle ayant de 1 à 20, avantageusement de 1 à 10 atomes de carbone, de préférence -CF₃, -C₂F₅, -C₄F₉, -C₆F₁₃, -C₈F₁₇ et -C₁₀F₂₁.

On peut également citer les sulfonylméthanes :
- FSO₂C(Q)HSO₂R'_{F},
- CF₃CH₂OSO₂C(Q)HSO₂R'_{F}, et
- (CF₃)₂CHOSO₂C(Q)HSO₂R'_{F},
dans lesquels :
- R'_{F} est choisi parmi F, CF₃CH₂O, (CF₃)₂CHO, et un groupement perfluoroalkyle ayant de 1 à 20, avantageusement de 1 à 10 atomes de carbone, de préférence -CF₃, -C₂F₅, -C₄F₉, -C₆F₁₃, -C₈F₁₇ et -C₁₀F₂₁, et
- Q est choisi parmi H, FSO₂, CF₃CH₂O-SO₂, (CF₃)₂CH-O-SO₂,un groupement alkyle, aryle, alkylaryle ou arylalkyle ayant au plus 30 atomes de carbone, un groupement perfluoroalkylsulfonyle ayant de 1 à 8 atomes de carbone, de préférence CF₃SO₂, C₂F₅SO₂, C₄F₉SO₂, C₆F₁₃SO₂ et C₈F₁₇SO₂, et un groupement perfluoroalkyle ayant de 1 à 12 atomes de carbone, de préférence -CF₃, -C₂F₅, -C₄F₉, -C₆F₁₃, -C₈F₁₇ et -C₁₀F₂₁ ; ou bien
- Q et R'_{F} forment ensemble un groupement divalent alkylène linéaire perfluoré ayant de 1 à 20, avantageusement de 1 à 8 atomes de carbone.

Parmi les composés définis ci-dessus, ceux qui font partie du groupe constitué par (FSO₂)₂NH ; (CF₃SO₂)₂-NH ; CF₃SO₂NHSO₂C₄F₉ ; (FSO₂)₃CH ; (FSO₂)₂CH₂ ; (CF₃CH₂OSO₂)₂NH ; [(CF₃)₂CHOSO₂]₂NH ; (CF₃CH₂OSO₂)₂CH₂ ; [(CF₃)₂-CHO-SO₂]₂CH₂ ; [(CF₃)₂-CHO-SO₂]₃CH [(CF₃)₂-CHO-SO₂]₃CH ; FSO₂NHSO₂CF₃ ; FSO₂NHSO₂C₂F₅ ; (CF₃)CHO-SO₂NHSO₂CF₃ ; (CF₃)₂CHOSO₂NHSO₂CF₃ ; (CF₃)₂CHOSO₂NHSO₂C₂F₅ ; CF₃CH₂OSO₂NHSO₂C₂F₅ et (C₄F₉SO₂)₂-NH sont particulièrement intéressants. Un composé tout particulièrement préféré est le triflimide (CF₃SO₂)₂NH.

Ces composés ainsi que leur procédé de préparation sont connus et décrits, notamment dans DE 2 239 817 ; FR 2 687 671 ; US 5 162 177, EP 571 832 et EP 834 492

Lorsque R_{F1} ou R'_{F} représente un reste polymère, celui-ci peut être un polysiloxane, un polyéther, etc..

Selon une autre variante de la présente invention, celle-ci concerne un procédé de cyclodimérisation tel que défini précédemment dans lequel le catalyseur est avantageusement un composé de la famille des super acides comportant au moins une fonction S(O)ₘOH, m étant égal à 1 ou 2, liée à un atome ou groupement électro-attracteur, ou un précurseur dudit composé

Avantageusement, le catalyseur comprend un composé de formule (II) :

R_{F2}-S(O)mOH (II)

dans laquelle R_{F2} représente un atome ou un groupement électro-attracteur et m représente 1 ou 2.

Plus particulièrement, R_{F2} peut être choisi parmi les atomes d'halogène, de préférence légers, notamment le fluor et le chlore, et parmi les groupes hydrocarbonés de préférence en C₁-C₆ comportant au moins un atome d'halogène, de préférence choisi parmi le fluor et le chlore.

Le groupe hydrocarboné peut être un groupe alkyle, alkylényle ; alkynyle, aryle, aralkyle ou alkylaryle ayant jusqu'à 20 atomes de carbone, avantageusement 4 atomes de carbone, au plus, éventuellement substitué par un groupement non réactif ou réactif vis à vis d'une fonction isocyanate.

Des groupes électro-attracteurs préférés sont les groupes hydrocarbonés en C₁-C₆ perhalogénés, notamment perchlorés et de préférence perfluorés.

De manière générale, on préfère que les atomes d'halogènes soient portés par des atomes de carbone situés le plus près possible du groupe S(O)ₘOH ; de préférence en α ou en β. Ils peuvent cependant être portés par des atomes de carbone plus éloignés. Dans ce cas, il est avantageux que l'atome de carbone portant les atomes d'halogène soit perhalogéné, de préférence perfluoré.

Un groupe de composés de formule générale (II) préféré est celui dans lequel R_{F2} répond à la formule générale (II') suivante :

-(CR₁R₂)ₚ-GEA (II')

dans laquelle
- R₁ et R₂, identiques ou différents, sont choisis parmi un atome d'hydrogène, d'halogène, notamment de fluor, un groupe alkyle en C₁-C₆, un groupe -NO₂, -CN, -COOH,
- COOR₃ où R₃ est un groupe alkyle en C₁-C₆, un groupe perfluoroalkyle en C₁-C₂₀, ou perfluoroaryle en C₆-C₂₀,
- p représente un nombre entier compris entre 0 et 2,
- le symbole GEA représente l'atome d'hydrogène, un atome d'halogène, notamment du fluor, un groupe alkyle en C₁-C₆, aryle en C₆-C₁₂, alkyl (en C₁-C₂) -aryle en C₆-C₁₂, éventuellement substitués par un ou plusieurs groupes ou atomes électro-attracteurs, ou un groupe électro-attracteur, sous réserve que la constante de Hammett du groupe -(CR₁R₂)ₚ-GEA soit au moins égale à 0,1.

Avantageusement, les symboles R₁ et R₂ identiques ou différents représentent un atome de fluor ou un groupe CₙF₂ₙ₊₁, avec n étant un entier compris entre 1 et 20, avantageusement 1 et 5, et de préférence entre 1 et 2 et GEA représente avantageusement un atome de fluor ou un reste perfluoré de formule CₙF₂ₙ₊₁, avec n tel que défini ci-dessus.

Parmi les définitions possibles de R_{F2}, on peut citer en particulier les atomes et groupes électro-attracteurs suivants :
F, CH₂F, CHF₂, CF₃, CH₂-CH₂F, CH₂-CHF₂, CH₂-CF₃, CHF-CH₂F₂, CHF-CHF₂, CHF-CF₃, CF₂-CH₃, CF₂-CH₂F, CF₂-CHF₂, CF₂-CF₃, CH₂-CH₂-CH₂F, CH₂-CH₂-CHF₂, CH₂-CH₂-CF₃, CH₂-CHF-CH₃, CH₂-CHF-CH₂F, CH₂-CHF-CHF₂, CH₂-CHF-CF₃, CH₂-CF₂-CH₃, -CH₂-CF₂-CH₂F, CH₂-CF₂-CHF₂, CH₂-CF₂-CF₃, CHF-CH₂-CH₃, CHF-CH₂-CH₂F, CHF-CH₂-CHF₂, CHF-CH₂-CF₃, CHF-CHF-CH₃, CHF-CHF-CH₂F, CHF-CHF-CHF₂, CHF-CHF-CF₃, CHF-CF₂-CH₃, CHF-CF₂-CH₂F, CHF-CF₂-CHF₂, CHF-CF₂-CF₃, CF₂-CH₂-CH₃, CF₂-CH₂-CH₂F, CF₂-CH₂-CHF₂, CF₂-CH₂-CF₃, CF₂-CHF-CH₃, CF₂-CHF-CH₂F, CF₂-CHF-CHF₂, CF₂-CHF-CF₃, CF₂-CF₂-CH₃, CF₂-CF₂-CH₂F, CF₂-CF₂-CHF₂, CF₂-CF₂-CF₃, et les groupements 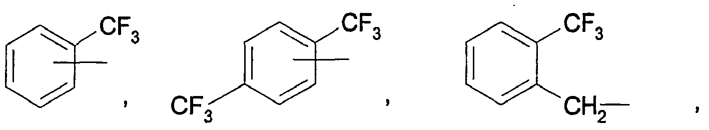 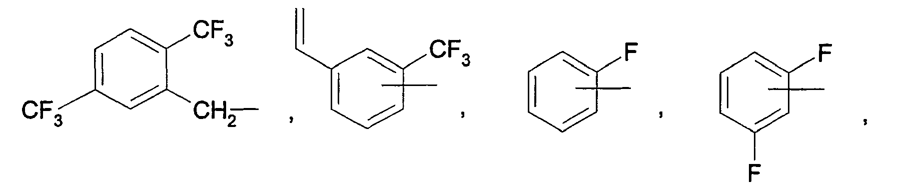 ainsi que les groupes correspondants dans lesquels l'atome de fluor est remplacé par un atome de chlore.

Un sous-groupe de composés préféré de formule (II) est celui dans lequel m représente 2.

Un composé particulièrement préféré est l'acide triflique CF₃SO₃H.

Le composé super acide utilisable dans le procédé de la présente invention en tant que catalyseur peut également être ajouté au milieu réactionnel à l'état latent, les formes latentes étant généralement des sels, notamment de phosphonium, de sulfonium et d'iodonium.

De telles formes latentes sont décrites notamment dans US 5,554,664, EP 834 502, US 5,699,224 et US 4,031,036. Les formes actives acides peuvent être restaurées par exemple par un processus physique tel qu'un chauffage ou au moyen d'énergie activable, notamment dans le cas où le catalyseur latent se trouve sous forme de sel de phosphonium.

Par exemple, lorsque le composé de formule générale (II) est introduit dans le milieu réactionnel sous forme de précurseur, celui-ci est un composé capable de libérer un composé de formule générale (II) dans le milieu réactionnel dans les conditions de réaction. On parle alors de catalyseur latent qui régénère la fonction acide S(O)ₘOH par un processus chimique, physique ou physicochimique.

On peut citer, notamment comme composés précurseurs de composés de formule générale (II), des composés esters de formule générale (III) ou silylés de formule générale (IV) : 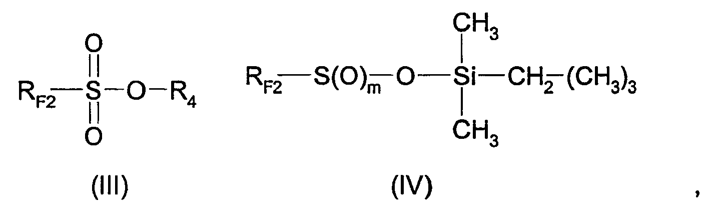 R_{F2} et m étant tels que définis ci-dessus, et R₄ représentant un radical alkyle comportant de 1 à 20 atomes de carbone.

On peut également citer des sels d'amines ou d'oniums énergétiquement activables tels que des sels de phosphonium, sulfonium et iodonium. On pourra se reporter par exemple aux composés décrits par Huang et al., Polymer, 41, (2000), 5001-5009.

Le catalyseur selon l'invention peut également comprendre un mélange d'au moins deux composés différents décrits ci-dessus.

La réaction de dimérisation selon l'invention peut être effectuée en l'absence de solvant ou dans un solvant non réactif avec la fonction isocyanate et généralement non réactif avec le catalyseur. On peut citer en particulier les chlorobenzène, le toluène, le trifluorométhylbenzène, l'acétate de n-butyle, le *tert*-butylméthyléther, etc.

Lorsque le catalyseur est soluble dans les isocyanates, la réaction est effectuée de préférence sans solvant. Les isocyanates étant en règle générale peu polaires, il sera avantageux de disposer de catalyseurs présentant une certaine solubilité dans le milieu réactionnel. À cet effet, l'usage de solvant, voire de co-solvant peut alors s'avérer efficace pour le procédé selon l'invention.

La présente invention vise la dimérisation de composés isocyanates en général et, de préférence, porteurs d'au moins deux fonctions isocyanates, désignés dans la présente description par isocyanates monomères.

II peut s'agir de monomères isocyanates à squelette hydrocarboné, aliphatiques linéaires, ramifiés ou cycliques voire aromatiques. Les monomères sont avantageusement des diisocyanates ou des triisocyanates.

La réaction de dimérisation peut également être réalisée à partir d'un mélange de différents monomères, auquel cas les produits obtenus seront des dimères, oligomères ou polydimères mixtes ou asymétriques, de même que les mélanges de trimères formés.

On peut citer en particulier, comme monomère diisocyanate aliphatique linéaire, l'hexaméthylènediisocyanate (HDI), et, comme monomère diisocyanate aliphatique ramifié, le 2-méthylpentaméthylène diisocyanate. On peut citer, comme monomère triisocyanate, le 4-isocyanatométhyl-1,8-octaméthylène diisocyanate.

De manière surprenante, le procédé selon l'invention donne de très bons résultats avec des monomères peu réactifs, notamment ceux dont au moins une fonction isocyanate est en position cycloaliphatique, secondaire, tertiaire ou néopentylique, et en particulier avec les monomères cycloaliphatiques, ou encore avec les isocyanates ayant un squelette ramifié, la(les) ramification(s) étant en α ou β de la fonction isocyanate.

Ces monomères sont avantageusement tels qu'au moins l'une, avantageusement les deux fonctions isocyanates, soit distante du cycle le plus proche d'au plus un carbone et, de préférence, est reliée directement à lui. En outre, ces monomères cycloaliphatiques présentent avantageusement au moins une, de préférence deux fonctions isocyanates portées par un atome de carbone choisies parmi les fonctions isocyanates secondaire, tertiaire ou néopentylique.

Le procédé selon l'invention donne de très bons résultats, y compris lorsque la liberté conformationnelle du monomère cycloaliphatique est faible. Comme monomères de ce type, on peut citer à titre d'exemple les monomères suivants :
- les composés correspondant à l'hydrogénation du ou des noyaux aromatiques porteurs des fonctions isocyanates de monomères d'isocyanates aromatiques et notamment du TDI (toluènediisocyanate) et des diisocyanato-biphényles, le composé connu sous le sigle H₁₂MDI, [4,4'-bis-(isocyanato)-cyclohexyl]méthane, les divers BIC [bis(isocyanatométhyl)-cyclohexane] et les cyclohexyldiisocyanates éventuellement substitués ;
et surtout
- le norbornanediisocyanate, souvent désigné par son sigle NBDI ;
- l'isophoronediisocyanate, ou IPDI, ou plus précisément 3-isocyanato-méthyl-3,5,5-triméthylcyclohexylisocyanate.

Comme monomères aromatiques, on peut citer le 2,4-toluène diisocyanate (TDI), le 2,6,4,4'-diphénylméthane diisocyanate (MDI), le 1,5-naphtalène diisocyanate (NDI), le tolidine diisocyanate (TODI) et le *para-*phénylène diisocyanate (PPDI).

On peut utiliser des monomères diisocyanates portant des fonctions non réactives avec la fonction isocyanate, notamment des fonctions esters. À titre d'exemple, on peut citer le produit suivant : 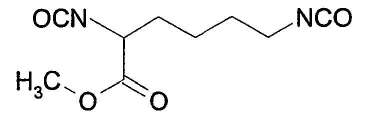 encore appelé LDI (lysine diisocyanate).

Les monomères de départ peuvent également être des triisocyanates tels que le 4-isocyanatométhyloctaméthylène 1,8-disocyanate, encore dénommé TTI ou encore le composé de formule : 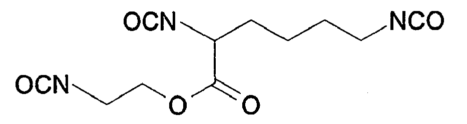 encore appelé LTI (lysine triisocyanate).

Les monomères de départ peuvent également être des produits d'oligomérisation d'isocyanates de plus faible masse moléculaire, ces produits d'oligomérisation étant porteurs de fonctions isocyanates ou des prépolymères à fonctions isocyanates de natures diverses (polyuréthane, polyester, polyacrylate, etc).. Dans ce cas, il n'est pas nécessaire de séparer l'oligomère non transformé du produit réactionnel formé à l'issue de la réaction de dimérisation.

Lorsque l'isocyanate monomère de départ est un produit d'oligomérisation comportant un cycle isocyanurate, notamment un isocyanate trimère, le produit réactionnel final comporte des motifs isocyanurates. Toutefois, le nombre de motifs isocyanurates est sensiblement celui présent dans le milieu réactionnel de départ avant la réaction de dimérisation.

On peut également utiliser des mélanges d'au moins un ou deux composés différents tels que définis ci-dessus, en particulier des mélanges de monomères isocyanates de faible poids moléculaire.

On obtient dans ce cas un dimère ou polydimère mixte ou asymétrique, à côté des dimères ou polydimères symétriques (obtenus par dimérisation d'un seul isocyanate monomère d'un seul type d'isocyanates monomères), ainsi que des trimères mixtes.

La température de dimérisation est comprise entre 0°C et 300°C et avantageusement entre 20°C et 200°C, de préférence entre 30°C et 80°C. Il sera parfois avantageux de réaliser la réaction à une température à laquelle l'isocyanate est à l'état partiellement ou totalement liquide ou fondu.

Lorsque le monomère de départ est l'IPDI, la température de réaction est avantageusement comprise entre 60°C et 100°C, préférentiellement aux environs de 60°C.

Le ratio molaire catalyseur/NCO est avantageusement d'au moins 10⁻⁵ et d'au plus 10⁻¹. Plus spécifiquement, le ratio molaire des fonctions -Y₁-X-Y₂-/NCO est avantageusement d'au moins 10⁻⁴, de préférence 10⁻³ et d'au plus 10⁻¹, avantageusement 5.10⁻². En ce qui concerne les rapports molaires des fonctions -S(O)ₘOH par rapport aux fonctions NCO du catalyseur, ceux-ci varient généralement entre 6.10⁻⁴ et 1,5.10⁻².

En dessous de la limite inférieure, la cinétique de réaction est fortement ralentie, mais contribue à la formation de produit de plus basse viscosité. Au delà de la limite supérieure, peuvent se poser des problèmes de solubilité du catalyseur dans le milieu réactionnel ou de réactivité trop rapide.

Lorsque le milieu réactionnel de départ contient un alcool, les catalyseurs de l'invention favorisent la formation de composés allophanates, à côté de composés dimères.

Lorsque la formation d'allophanates est recherchée, il peut être avantageux d'ajouter dans le milieu réactionnel un catalyseur de type acide de Lewis, tel que le dibutyl-dilaurate d'étain.

Les catalyseurs super acides définis précédemment permettent également d'obtenir des isocyanates dimères réticulés, par addition dans le milieu réactionnel de départ d'un composé possédant au moins deux fonctions capables de réagir avec les fonctions NCO. Il s'agit généralement de fonctions porteuses d'un hydrogène mobile, par exemple un groupement hydroxyle.

On peut citer les composés éventuellement oligomère ou polymère, comportant au moins une, de préférence deux fonctions OH tels que éthylène glycol, hexane diol, triméthylolpropane, pentaérythritol, polyéthylène glycol, polyols acryliques, polyols esters. Dans ce cas également, on peut travailler en l'absence ou en présence de solvant.

La destruction du catalyseur est complète lorsque pratiquement la totalité du catalyseur acide est neutralisée ou absorbée sur un support, de préférence basique ou amphotère (silice, alumine, zéolite, etc).

En général, la dimérisation est menée jusqu'au taux de transformation désiré compris entre 1 et 95 % des fonctions isocyanates présentes. Pour des raisons économiques évidentes, on préfère arrêter la réaction à des taux de transformation des fonctions isocyanates d'au moins 5 % et de façon préférée entre 10 et 50 %. Une fois la réaction de dimérisation arrêtée, on élimine en général le reste des monomères par évaporation ou distillation sur film mince et sous vide poussé.

Dans le cas de composés monomères trifonctionnels, cette élimination des monomères n'est pas nécessaire. L'élimination des monomères n'est pas nécessaire non plus dans le cas où le milieu réactionnel est utilisé dans le but de préparer un prépolymère.

La réaction peut être arrêtée par destruction du catalyseur, telle qu'obtenue par addition d'une base, notamment l'acétate de sodium, ou l'hydrogénocarbonate de sodium, ou encore par élimination du catalyseur, par exemple par absorption de celui-ci sur un support minéral, par exemple (silice, alumine, charbon), distillation du milieu réactionnel, absorption sur une résine échangeuse d'ions, basique de type amine tertiaire ou ammonium quaternaire dont le contre-ion a une acidité plus faible que le catalyseur, notamment par exemple une résine Amberlite® échangeuse d'anions (-OH⁻, -COO- ou -COO⁻) ou encore par distillation du milieu réactionnel.

Pour l'élimination du catalyseur du milieu réactionnel, une simple filtration est suffisante, en particulier lorsque le procédé est en batch.

Les catalyseurs selon l'invention permettent d'obtenir des polyisocyanates à motif(s) uretdione(s) avec une sélectivité élevée, à savoir un taux élevé en dimères vrais. Toutefois, si le taux de transformation est élevé, cette sélectivité diminue du simple fait de réactions d'oligomérisation. La sélectivité est particulièrement élevée pour des monomères portant plusieurs fonctions isocyanates présentant des réactivités différentes, par exemple l'IPDI.

Le procédé selon l'invention permet la préparation de compositions isocyanates comprenant des polyisocyanates uretdiones. Avantageusement, la composition polyisocyanate finale comprend des polyisocyanates uretdiones, des polyisocyanates isocyanurates et éventuellement des composés minoritaires lourds ou le cas échéant des allophanates urées, biurets, carbonates, esters, etc.

Les exemples non limitatifs suivants illustrent l'invention. Sauf mention contraire, les pourcentages sont exprimés en poids.

### EXEMPLES 1 à 3 : Préparation de compositions polyisocyanates

*Réactifs (% exprimés en poids*/*poids):*
- IPDI = 20 g.
- catalyseur (CF₃SO₂)₂NH = 0,2 ; 0,5 et 1 g, respectivement.
- solution de blocage, acétate de sodium = 0,06 ; 0,15 et 0,3 g, respectivement.

### Mode opératoire

La réaction est effectuée dans un réacteur de 1 L avec agitation mécanique, régulation de la température et barbotage d'argon par canne plongeante.
On introduit successivement dans le réacteur l'IPDI puis le catalyseur. Le milieu réactionnel est maintenu à une température de 60°C, sous agitation. L'avancement de la réaction est suivi par titration des fonctions isocyanates résiduelles. Après une durée totale de 5 heures, le taux de transformation de l'IPDI atteint 19,1 % (pour une quantité de catalyseur de 1 %), la solution de blocage (60 mg d'acétate de sodium pour 1 % de catalyseur) est introduite et, 30 minutes après, la masse réactionnelle est refroidie à température ambiante.
La masse réactionnelle est distillée sur double évaporateur à couche mince sous vide de 0,5 mm Hg, à une température de 170°C.
Le produit final est un solide.
On trouvera ci-après l'analyse du milieu réactionnel avant distillation du monomère IPDI.

| **Conditions réaction** | **Ex 1** | **Ex 2** | **Ex 3** |
|---|---|---|---|
| Température et temps de réaction | 60°C / 5H | 60°C / 5H | 60°C /5H |
| Nature et quantité isocyanate | IPDI 20 g /0,09 mole | IPDI 20 g / 0,09 mole | IPDI 20 g / 0,09 mole |
| Nature et quantité du catalyseur | TFSI/0,2g | TFSI/0,5g | TFSI/1g |
| % pondéral catalyseur / isocyanate | 1 % | 2,5 % | 5 % |
| Quantité molaire catalyseur utilisé | 7,12.10⁻⁴ | 1,8.10⁻³ | 3,6.10⁻³ |
| Quantité molaire fonction H+ | 7,12.10⁻⁴ | 1,8.10⁻³ | 3,6.10⁻³ |
| Ratio molaire fonction H+ / NCO | 4.10⁻³ | 1.10⁻² | 2.10⁻² |

| **Composants** | | | |
|---|---|---|---|
| IPDI | 80,9 % | 71,2 % | 60,3 % |
| Taux de transformation de l'IPDI | 19,1 % | 28,8 % | 39,7 % |
| Dimère vrai | 14,3 % | 17,6 % | 16,4 % |
| Trimère + Bis-dimère | | 6,3 % | 7,2 % |
| Bis-dimère | 3,7 % | | |
| Bis-Trimère | | | 4 % |
| Lourds en tris-dimère | 1,1% | 5,0 % | 3,7%* |
| Ratio dimère vrai / somme des composés | 74,9 % | 61 % | 52 % |

| | | | |
|---|---|---|---|
| * : Présence d'isocyanurate TFSI = Bis (N,N-trifluorométhanesulfonyl)amine (CF₃SO₂)₂-NH / PM du TFSI = 281 | | | |

### EXEMPLE 4

On procède comme pour les exemples 1 à 3 avec une quantité de catalyseur égale à 5 % en poids de TFSI par rapport à l'IPDI, et avec la différence que l'on ajoute au milieu réactionnel de départ 0,66 g de n-butanol (soit 10 % molaire par rapport à l'IPDI engagé).
La composition du milieu réactionnel avant élimination de l'IPDI monomère est donnée au tableau ci-après :

| **Conditions de réaction** | **Exemple 4** |
|---|---|
| Température et temps de réaction | 60°C / 5H |
| Nature et quantité isocyanate | IPDI 20 g / 0,09 mole |
| Nature et quantité du catalyseur | TFSI/1g |
| % pondéral catalyseur / isocyanate | 5 % |
| Quantité molaire catalyseur utilisé | 3,6.10⁻³ |
| Quantité molaire fonction H+ | 3,6.10⁻³ |
| Ratio molaire fonction H+ / NCO | 2.10⁻² |
| Nature et quantité de composé protique | 10 % molaire n BuOH / IPDI : 0,66 g |

| **Composants** | |
|---|---|
| IPDI | 50,6 % |
| Taux de transformation de l'IPDI | 49,4 % |
| Dimère vrai d'IPDI | 18,5 % |
| Allophanate de n-butyle et d'IPDI | 5,4 % |
| Bis-dimère + trimère en faible quantité* | 10,6 % |
| Lourds en tris-dimère* | 14,9 % |
| Ratio dimère vrai sur somme des composants hors monomère | 37,5% |

| | |
|---|---|
| Fonction allophanate de n butyle et d'IPDI et trimère sous les massifs bis-dimère et lourds. | |

### EXEMPLE 5 : Préparation d'une composition polyisocyanate à motifs dimères issue de l'HDI

On procède comme pour les exemples 1-3 sauf que l'on travaille à 100°C.

| **Conditions de réaction** | **Exemple 5** |
|---|---|
| Température et temps de réaction | 100°C / 5H |
| Nature et quantité isocyanate | IPDI 20 g / 0,09 mole |
| Nature et quantité du catalyseur | TFSI / 0,5 g |
| % pondéral catalyseur / isocyanate | 2,5 % |
| Quantité molaire catalyseur utilisé | 1,8.10⁻³ |
| Quantité molaire fonction H+ | 1,8.10⁻³ |
| Ratio molaire fonction H+ / NCO | 1.10⁻² |

| **Composants** | |
|---|---|
| IPDI | 82,4 % |
| Taux de transformation de l'IPDI | 17,6 % |
| Dimère vrai d'IPDI | 7,7 % |
| Bis-dimère + trimère | 7,2 % |
| Lourds | 2,7 % |
| Ratio dimère vrai/somme des composants hors monomère | 43,75 % |

### EXEMPLE 6

*Réactifs (% exprimés en poidslpoids) :*
- IPDI = 20 g
- catalyseur = acide triflique (CF₃SO₃H) = 0,2 g
- agent de blocage = acétate de sodium = 0,5g

### Mode opératoire

La réaction est effectuée dans un réacteur de 1 L avec agitation mécanique et régulation de la température et bullage d'argon par canne plongeante. On introduit successivement dans le réacteur l'isocyanate puis le catalyseur. La solution catalytique est introduite en 10 minutes sous agitation de manière à maintenir le milieu réactionnel à une température de 60°C. L'avancement de la réaction est suivi par titration des fonctions isocyanates résiduelles. Après une durée totale de 6 h, le taux de transformation de l'IPDI atteint environ 20 %. L'agent de blocage est introduit et, 15 minutes après, la masse réactionnelle est refroidie à température ambiante.
La masse réactionnelle est distillée sur double évaporateur à couche mince, à une température de 180°C et un vide de 0,3 mbar, pour éliminer le monomère isocyanate résiduel.
La composition du milieu réactionnel avant addition de l'agent de blocage et élimination de l'IPDI monomère est donnée au tableau ci-après :

| **Produits** | **% en poids** |
|---|---|
| IPDI | 81,3 |
| Dimère | 12,6 |
| Bis-dimère | 3,2 |
| tris-dimère | 2,7 |
| rapport dimère vrai/somme des dimères | 68 |

### EXEMPLE 7

Les conditions opératoires de l'exemple 6 sont répétées sauf que la quantité de CF₃SO₃H ajoutée est de 0,5 g et la quantité d'acétate de sodium est de 1 g.

### EXEMPLE 8

Les conditions opératoires de l'exemple 6 sont répétées sauf que l'on ajoute au milieu réactionnel de départ 0,74 g de n-butanol.

### EXEMPLE 9

Les conditions opératoires de l'exemple 7 sont répétées sauf que l'on ajoute au milieu réactionnel de départ 0,74 g de n-butanol.

### EXEMPLE 10

On répète l'exemple 6 en utilisant 2,5 % en poids du catalyseur et en élevant la température réactionnelle à 100°C.

### EXEMPLE 11

On répète l'exemple 10 en remplaçant l'IPDI par de l'HDI.

La composition du milieu réactionnel final des **exemples 6 à 11** est donnée ci-après :

| **Exemples** | **6** | **7** | **8** | **9** | **10** | **11** |
|---|---|---|---|---|---|---|
| IPDI | 81,3% | 72,3% | 65,0 % | 50,6 % | 80,7% | |
| HDI | | | | | | 93,6 % |
| Dimère | 12,6 % | 16,9% | 15,7% | 18,5% | 7,3% | 1,62 % |
| Bis-dimère | 3,2 % | 5,5 % | 7,1 % | | 4,1 % | 2,5% |
| Tris-dimère | 2,7 % | 5,3 % | 4,0 % | | | |
| Allophanate de butyle et d'IPDI | | | 8,2 % | 5,4% | | |
| Bis-dimère* | | | | 10,6 % | | |
| Lourds en tris-dimère* | - | - | 4,0 % | 14,9 % | 6,9 % | 1,8 % |
| rapport dimère vrai/somme des dimères | 68 | 61 | 59 | | | |

| | | | | | | |
|---|---|---|---|---|---|---|
| * à fonctions allophanates de butyle et d'IPDI | | | | | | |

## Revendications

1. Procédé de préparation de polyisocyanates par cyclodimérisation de fonctions isocyanates portées par des isocyanates monomères de départ, **caractérisé en ce qu'**il comprend les étapes de :
a. fourniture d'un milieu réactionnel comprenant des isocyanates monomères de départ, éventuellement en présence d'un solvant ;
b. addition à ce milieu réactionnel d'un catalyseur de (cyclo)dimérisation, dont la constante d'acidité définie par Hammet est strictement inférieure à -12 et comprenant un composé de la famille des super acides ;
c. chauffage du milieu réactionnel à une température comprise dans l'intervalle de 0°C à 300°C, avantageusement de 20°C à 200°C jusqu'à obtention du taux de transformation désiré compris entre 1 et 95 %, avantageusement 5 et 50 % des fonctions isocyanates initiales ;
d. éventuellement inactivation ou élimination du catalyseur de réaction ; et
e. éventuellement élimination des monomères n'ayant pas réagi.

2. Procédé selon la revendication 1, **caractérisé en ce que** le catalyseur est un super acide choisi parmi les acides sulfoniques, les sulfonimides, les sulfonylméthanes, seuls ou en mélange, ainsi que leurs dérivés.

3. Procédé selon la revendication 2, **caractérisé en ce que** le catalyseur comprend en outre un acide choisi parmi les fluorures de phosphore, les fluorures d'antimoine, les fluorures (et hydrofluorures) de bore, etc., seuls ou en mélange, ainsi que leurs dérivés.

4. Procédé selon l'une des revendications précédentes, **caractérisé en ce que** le catalyseur est un composé de la famille des super acides comportant au moins un groupement bivalent -Y₁-X-Y₂- lié à un atome ou un groupement électro-attracteur dans lequel :
• X est choisi parmi NH et C(Q)H ;
• Y₁ et Y₂, identiques ou différents, sont choisis parmi le groupe SO₂ et le groupe CO ;
• Q est choisi parmi :
* H, CI, F, Br ,CN ;
* un radical alkyle ayant de 1 à 30 atomes de carbone ;
* un radical aryle ou aralkyle ayant de 6 à 30 atomes de carbone ;
* un groupe R"_{F}, un groupe R"_{F}SO₂-, ou R"_{F}CO-, un groupe R"_{F}CH₂OSO₂- ou R"_{F}CH₂OCO-, et un groupe (R"_{F})₂CHO-SO₂- ou (R"_{F})₂CH₂O-CO- ; R"_{F} étant choisi dans le groupe constitué par le fluor, le chlore, le brome, le groupe -CN, les groupes alkyle, alkényle, haloalkyle, haloalkényle, halocycloalkyle ou halocycloalkényle ayant de 1 à 20, de préférence 1 à 6 atomes de carbone, les groupes cycloalkyle, cycloalkényle, halocycloalkyle ou halocyclo-alkényle ayant de 3 à 30, avantageusement de 3 à 10 atomes de carbone, les groupes aryle, alkylaryle ou haloaryle ayant de 6 à 30, de préférence 6 à 10 atomes de carbone, les groupements perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes ;
* sous réserve que, lorsque Q représente H, alors Y₁ et Y₂ représentent chacun le groupe -SO₂-.

5. Procédé selon l'une des revendications précédentes, **caractérisé en ce que** le catalyseur de (cyclo)dimérisation comprend un composé de formule (I) :
R_{F}-Y₁-X-Y₂R'_{F} (1)
dans laquelle :
• X est choisi parmi NH et C(Q)H ;
• Y₁ et Y₂, identiques ou différents, sont choisis parmi le groupe SO₂ et le groupe CO ;
• Q est choisi parmi :
* H, CI, F, Br ,CN ;
* un radical alkyle ayant de 1 à 30 atomes de carbone ;
* un radical aryle ou aralkyle ayant de 6 à 30 atomes de carbone ;
* un groupe R"_{F}, un groupe R"_{F}SO₂-, ou R"_{F}CO-, un groupe R"_{F}CH₂OSO₂- ou R"_{F}CH₂OCO-, et un groupe (R"_{F})₂CHO-SO₂- ou (R"_{F})₂CH₂O-CO- ; R"_{F} étant choisi dans le groupe constitué par le fluor, le chlore, le brome, le groupe -CN, les groupes alkyle, alkényle, haloalkyle, haloalkényle, halocycloalkyle ou halocycloalkényle ayant de 1 à 20, de préférence 1 à 6 atomes de carbone, les groupes cycloalkyle, cycloalkényle, halocycloalkyle ou halocyclo-alkényle ayant de 3 à 30, avantageusement de 3 à 10 atomes de carbone, les groupes aryle, alkylaryle ou haloaryle ayant de 6 à 30, de préférence 6 à 10 atomes de carbone, les groupements perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes ;
* sous réserve que, lorsque Q représente H, alors Y₁ et Y₂ représentent chacun le groupe -SO₂-.R_{F} est choisi parmi R_{F1}, R_{F1}CH₂O- ; et (R_{F1})₂CHO- ;
• R_{F1} et R'_{F}, identiques ou différents sont choisis dans le groupe constitué par le fluor, le chlore, le brome, le groupe CN, les groupes alkyle, alkényle, haloalkyle, haloalkényle, halocycloalkyle ou halocycloalkényle ayant de 1 à 20, de préférence 1 à 6 atomes de carbone, les groupes cycloalkyle, cycloalkényle, halocycloalkyle ou halocycloalkényle ayant de 3 à 30, avantageusement de 3 à 10 atomes de carbone, les groupes aryle, alkylaryle ou haloaryle ayant de 6 à 30, de préférence 6 à 10 atomes de carbone, les groupements perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes ou
• l'un de R_{F1} et R'_{F} représente un reste polymère lié à Y₁ ou Y₂ par un groupe espaceur et sous réserve que l'un de R_{F1} et R'_{F} représente un groupe choisi parmi les groupes perhaloalkyles ayant de 1 à 30 atomes de carbone, les groupements (perhaloalkyl)alkoxy ayant de 2 à 30 atomes de carbone, les groupements cycloaliphatiques perhalogénés ayant de 3 à 30 atomes de carbone contenant éventuellement des hétéroatomes choisis parmi O, S et N et/ou portant éventuellement au moins un chaînon perhaloalkyle, et les groupements aryles perhalogénés ayant de 6 à 30 atomes; ou bien
• R_{F1} et R'_{F} forment ensemble un radical divalent choisi parmi les radicaux alkylènes linéaires perfluorés ou perchlorés ayant de 2 à 20 atomes, avantageusement de 2 à 8 de carbone ; ou bien
• lorsque X représente C(Q)H, R'_{F} et R"_{F} d'une part, et/ou R_{F1} et R"_{F} d'autre part forment ensemble un radical divalent choisi parmi les radicaux alkylènes linéaires ou ramifiés perfluorés ou perchlorés ayant de 2 à 20, avantageusement de 2 à 8 atomes de carbone, et
• sous réserve que lorsque Q représente H, alors Y₁ et Y₂ sont des groupes SO₂.

6. Procédé selon la revendication 5, **caractérisé en ce que** ledit composé de formule générale (I) est choisi parmi les sulfonimides :
• FSO₂NHSO₂R'_{F},
• CF₃SO₂-NH-SO₂R'_{F},
• CF₃CH₂OSO₂NHSO₂R'_{F},
• (CF₃)₂CH-SO₂-NH-SO₂R'_{F}, et
• (CF₃)₂CHOSO₂NHSO₂R'_{F},
dans lesquels le radical R'_{F} est choisi parmi F, CF₃CH₂O, (CF₃)₂CHO, et un groupement perfluoroalkyle ayant de 1 à 20, avantageusement de 1 à 10 atomes de carbone, de préférence -CF₃, -C₂F₅, -C₄F₉, -C₆F₁₃, -C₈F₁₇ et -C₁₀F₂₁.

7. Procédé selon la revendication 5, **caractérisé en ce que** ledit composé de formule générale (I) est choisi parmi les sulfonylméthanes :
• FSO₂C(Q)HSO₂R'_{F},
• CF₃CH₂OSO₂C(Q)HSO₂R'_{F}, et
• (CF₃)₂CHOSO₂C(Q)HSO₂R'_{F},
dans lesquels:
- R'_{F} est choisi parmi F, CF₃CH₂O, (CF₃)₂CHO, et un groupement perfluoroalkyle ayant de 1 à 20, avantageusement de 1 à 10 atomes de carbone, de préférence -CF₃, -C₂F₅, -C₄F₉, -C₆F₁₃, -C₈F₁₇ et -C₁₀F₂₁, et
- Q est choisi parmi H, FSO₂, CF₃CH₂O-SO₂, (CF₃)₂CH-O-SO₂,un groupement alkyle, aryle, alkylaryle ou arylalkyle ayant au plus 30 atomes de carbone, un groupement perfluoroalkylsulfonyle ayant de 1 à 8 atomes de carbone, de préférence CF₃SO₂, C₂F₅SO₂, C₄F₉SO₂, C₆F₁₃SO₂ et C₈F₁₇SO₂, et un groupement perfluoroalkyle ayant de 1 à 12 atomes de carbone, de préférence -CF₃, -C₂F₅, -C₄F₉, -C₆F₁₃, -C₈F₁₇ et -C₁₀F₂₁ ; ou bien
- Q et R'_{F} forment ensemble un groupement divalent alkylène linéaire perfluoré ayant de 1 à 20, avantageusement de 1 à 8 atomes de carbone.

8. Procédé selon l'une des revendications 5 à 7, **caractérisé en ce que** le composé de formule générale (I) est choisi parmi (FSO₂)₂NH; (CF₃SO₂)₂-NH ; CF₃SO₂NHSO₂C₄F₉ ; (FSO₂)₃CH ; (FSO₂)₂CH₂ ; (CF₃CH₂OSO₂)₂NH ; [(CF₃)₂CHOSO₂]₂NH ; (CF₃CH₂OSO₂)₂CH₂ ;[(CF₃)₂-CHO-SO₂]₂CH₂ ;[(CF₃)₂-CHO-SO₂]₃CH ;[(CF₃)₂-CHO-SO₂]₃CH ; FSO₂NHSO₂CF₃ ; FSO₂NHSO₂C₂F₅ ;(CF₃)CHO-SO₂NHSO₂CF₃ ; (CF₃)₂CHOSO₂NHSO₂CF₃ ; (CF₃)₂CHOSO₂NHSO₂C₂F₅ ; CF₃CH₂OSO₂NHSO₂C₂F₅ et (C₄F₉SO₂)₂-NH.

9. Procédé selon la revendication 8, **caractérisé en ce que** le catalyseur de dimérisation est le triflimide (CF₃SO₂)₂NH.

10. Procédé selon l'une quelconque des revendications 1 à 3, **caractérisé en ce que** le catalyseur super acide comporte au moins une fonction S(O)ₘOH, m étant égal à 1 ou 2, liée à un atome ou groupement électro-attracteur, ou un précurseur dudit composé.

11. Procédé selon la revendication 10, **caractérisé en ce que** l'atome ou groupement électro-attracteur est choisi parmi les atomes ou groupements attracteurs dont la constante de Hammett σₚ est au moins égale à 0,1.

12. Procédé selon la revendication 10 ou 11, **caractérisé en ce que** le catalyseur comprend un composé de formule (II) :
R_{F2}-S(O)mOH (II)
dans laquelle R_{F2} représente un atome ou un groupement électro-attracteur et m représente 1 ou 2.

13. Procédé selon la revendication 12, **caractérisé en ce que** le catalyseur comprend un composé de formule (II) dans laquelle R_{F2} est choisi parmi les atomes d'halogène, de préférence légers, notamment le fluor et le chlore, et parmi les groupes hydrocarbonés de préférence en C₁-C₆ comportant au moins un atome d'halogène, de préférence choisi parmi le fluor et le chlore.

14. Procédé selon la revendication 12 ou 13, **caractérisé en ce que** le catalyseur comprend un composé de formule (II) dans laquelle R_{F2} répond à la formule générale (II') suivante :
-(CR₁R₂)ₚ-GEA (II')
dans laquelle
R₁ et R₂, identiques ou différents, sont choisis parmi un atome d'hydrogène, d'halogène, notamment de fluor, un groupe alkyle en C₁-C₆, un groupe -NO₂, -CN, -COOH, -COOR₃ où R₃ est un groupe alkyle en C₁-C₆, un groupe perfluoroalkyle en C₁-C₂₀, ou perfluoroaryle en C₆-C₂₀,
p représente un nombre entier compris entre 0 et 2,
le symbole GEA représente l'atome d'hydrogène, un atome d'halogène, notamment du fluor, un groupe alkyle en C₁-C₆, aryle en C₆-C₁₂, alkyl (en C₁-C₂) -aryle en C₆-C₁₂, éventuellement substitués par un ou plusieurs groupes ou atomes électro-attracteurs, ou un groupe électro-attracteur, sous réserve que la constante de Hammett du groupe -(CR₁R₂)ₚ-GEA soit au moins égale à 0,1.

15. Procédé selon l'une des revendications 12 à 14, **caractérisé en ce que** les symboles R₁ et R₂, identiques ou différents, représentent un atome de fluor ou un groupe CₙF₂ₙ₊₁, avec n étant un entier compris entre 1 et 20, et GEA représente avantageusement un atome de fluor ou un reste perfluoré de formule CₙF₂ₙ₊₁, avec n tel que défini précédemment.

16. Procédé selon l'une quelconque des revendications 10 à 15, **caractérisé en ce que** le dit atome ou groupe électro-attracteur est choisi parmi :
F, CH₂F, CHF₂, CF₃, CH₂-CH₂F, CH₂-CHF₂, CH₂-CF₃, CHF-CH₂F₂, CHF-CHF₂, CHF-CF₃, CF₂-CH₃, CF₂-CH₂F, CF₂-CHF₂, CF₂-CF₃, CH₂-CH₂-CH₂F, CH₂-CH₂-CHF₂, CH₂-CH₂-CF₃, CH₂-CHF-CH₃, CH₂-CHF-CH₂F, CH₂-CHF-CHF₂, CH₂-CHF-CF₃, CH₂-CF₂-CH₃, -CH₂-CF₂-CH₂F, CH₂-CF₂-CHF₂, CH₂-CF₂-CF₃, CHF-CH₂-CH₃, CHF-CH₂-CH₂F, CHF-CH₂-CHF₂, CHF-CH₂-CF₃, CHF-CHF-CH₃, CHF-CHF-CH₂F, CHF-CHF-CHF₂, CHF-CHF-CF₃, CHF-CF₂-CH₃, CHF-CF₂-CH₂F, CHF-CF₂-CHF₂, CHF-CF₂-CF₃, CF₂-CH₂-CH₃, CF₂-CH₂-CH₂F, CF₂-CH₂-CHF₂, CF₂-CH₂-CF₃, CF₂-CHF-CH₃, CF₂-CHF-CH₂F, CF₂-CHF-CHF₂, CF₂-CHF-CF₃, CF₂-CF₂-CH₃, CF₂-CF₂-CH₂F, CF₂-CF₂-CHF₂, CF₂-CF₂-CF₃, et les groupements 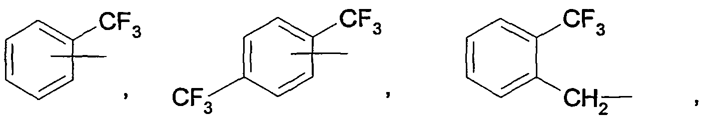 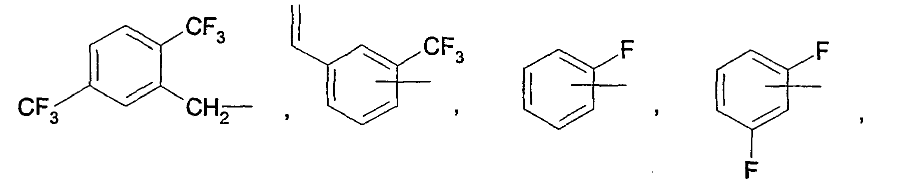 ainsi que les groupes correspondants dans lesquels l'atome de fluor est remplacé par un atome de chlore.

17. Procédé selon la revendication 10, **caractérisé en ce que** m est égal à 2.

18. Procédé selon l'une quelconque des revendications 10 à 17, **caractérisé en ce que** le catalyseur de dimérisation est l'acide triflique CF₃SO₃H.

19. Procédé selon l'une des revendications précédentes, pour la cyclodimérisation de monomères dont au moins une fonction isocyanate est en position cycloaliphatique, secondaire, tertiaire ou néopentylique.

20. Procédé selon la revendication 19, **caractérisé en ce que** le monomère de départ est l'IPDI.

21. Procédé selon l'une des revendications précédentes, **caractérisé en ce que** le ratio molaire catalyseur/NCO est d'au moins 10⁻⁵ et d'au plus 10⁻¹.

22. Procédé selon la revendication 21, **caractérisé en ce que** le ratio molaire des fonctions Y₁-X-Y₂/NCO est d'au moins 10⁻⁴, avantageusement au moins 10⁻³.

23. Procédé selon la revendication 22, **caractérisé en ce que** le ratio molaire des fonctions Y₁-X-Y₂/NCO est d'au plus 10⁻¹, avantageusement d'au plus 5.10⁻².

24. Procédé selon la revendication 21, **caractérisé en ce que** le ratio molaire des fonctions S(O)ₘOH par rapport aux fonctions NCO du catalyseur est compris entre 6.10⁻⁴ et 1,5.10⁻².

25. Procédé selon l'une quelconque des revendications précédentes, **caractérisé en ce que** l'on ajoute au milieu réactionnel un alcool, de manière à former des allophanates en plus des dimères.

26. Procédé selon l'une quelconque des revendications précédentes, **caractérisé en ce que** l'on ajoute au milieu réactionnel un polyol, de manière à former des dimères réticulés.

## Claims

1. Method for preparing polyisocyanates by cyclodimerization of isocyanate functional groups carried by starting monomeric isocyanates, **characterized in that** it comprises the steps of:
a. providing a reaction medium comprising starting monomeric isocyanates, optionally in the presence of a solvent;
b. adding to this reaction medium a (cyclo)dimerization catalyst, whose acidity constant defined by Hammett is strictly less than -12 comprising a compound of the superacid family;
c. heating the reaction medium at a temperature in the range between 0°C and 300°C, advantageously from 20°C to 200°C until the desired rate of conversion of between 1 and 95%, advantageously 5 and 50%, of the initial isocyanate functional groups is obtained;
d. optionally inactivating or removing the reaction catalyst; and
e. optionally removing the unreacted monomers.

2. Method according to Claim 1, **characterized in that** the catalyst is a superacid chosen from sulfonic acids, sulfonimides, sulfonylmethanes, and the like, alone or as a mixture, and derivatives thereof.

3. Method according to Claim 2, **characterized in that** the catalyst also comprises an acid chosen from phosphorus fluorides, antimony fluorides, boron fluorides (and hydrofluorides), and the like, alone or as a mixture, and derivatives thereof.

4. Method according to one of the preceding claims, **characterized in that** the catalyst is a compound of the superacid family containing at least one divalent group -Y₁-X-Y₂- linked to an electron-attracting atom or group, in which:
• X is chosen from NH and C(Q)H;
• Y₁ and Y₂, which are identical or different, are chosen from the SO₂ group and the CO group;
• Q is chosen from:
* H, Cl, F, Br, CN;
* an alkyl radical having from 1 to 30 carbon atoms;
* an aryl or aralkyl radical having from 6 to 30 carbon atoms;
* a group R"_{F}, a group R"_{F}SO₂-, or R"_{F}CO-, a group R"_{F}CH₂OSO₂- or R"_{F}CH₂OCO-, and a group (R"_{F})₂CHO-SO₂- or (R"_{F})₂CH₂O-CO-; R"_{F} being chosen from the group consisting of fluorine, chlorine, bromine, the -CN group, the alkyl, alkenyl, haloalkyl, haloalkenyl, halocycloalkyl or halocycloalkenyl groups having from 1 to 20, preferably 1 to 6 carbon atoms, cycloalkyl, cycloalkenyl, halocycloalkyl or halocycloalkenyl groups having from 3 to 30, advantageously from 3 to 10, carbon atoms, aryl, alkylaryl or haloaryl groups having from 6 to 30, preferably 6 to 10, carbon atoms, perhaloalkyl groups having from 1 to 30 carbon atoms, (perhaloalkyl)alkoxy groups having from 2 to 30 carbon atoms, perhalogenated cycloaliphatic groups having from 3 to 30 carbon atoms optionally containing heteroatoms chosen from O, S and N and/or optionally carrying at least one perhaloalkyl grouping, and the perhalogenated aryl groups having from 6 to 30 atoms;
* with the proviso that when Q represents H, then Y₁ and Y₂ each represent the group -SO₂-.

5. Method according to one of the preceding claims, **characterized in that** the (cyclo)dimerization catalyst comprises a compound of formula (I):
R_{F}-Y₁-X-Y₂-R'_{F} (I)
in which:
• X is chosen from NH and C(Q)H;
• Y₁ and Y₂, which are identical or different, are chosen from the SO₂ group and the CO group;
• Q is chosen from:
* H, Cl, F, Br, CN;
* an alkyl radical having from 1 to 30 carbon atoms;
* an aryl or aralkyl radical having from 6 to 30 carbon atoms;
* a group R"_{F}, a group R"_{F}SO₂-, or R"_{F}CO-, a group R"_{F}CH₂OSO₂- or R"_{F}CH₂OCO-, and a group (R"_{F})₂CHO-SO₂- or (R"_{F})₂CH₂O-CO-; R"_{F} being chosen from the group consisting of fluorine, chlorine, bromine, the -CN group, the alkyl, alkenyl, haloalkyl, haloalkenyl, halocycloalkyl or halocycloalkenyl groups having from 1 to 20, preferably 1 to 6 carbon atoms, cycloalkyl, cycloalkenyl, halocycloalkyl or halocycloalkenyl groups having from 3 to 30, advantageously from 3 to 10, carbon atoms, aryl, alkylaryl or haloaryl groups having from 6 to 30, preferably 6 to 10, carbon atoms, perhaloalkyl groups having from 1 to 30 carbon atoms, (perhaloalkyl)alkoxy groups having from 2 to 30 carbon atoms, perhalogenated cycloaliphatic groups having from 3 to 30 carbon atoms optionally containing heteroatoms chosen from O, S and N and/or optionally carrying at least one perhaloalkyl grouping, and the perhalogenated aryl groups having from 6 to 30 atoms;
* with the proviso that when Q represents H, then Y₁ and Y₂ each represent the group -SO₂-. R_{F} is chosen from R_{F1}, R_{F1}CH₂O-; and (R_{F1})₂CHO-;
• R_{F1} and R'_{F}, which are identical or different, are chosen from the group consisting of fluorine, chlorine, bromine, the CN group, alkyl, alkenyl, haloalkyl, haloalkenyl, halocycloalkyl or halocycloalkenyl groups having from 1 to 20, preferably 1 to 6 carbon atoms, cycloalkyl, cycloalkenyl, halocycloalkyl or halocycloalkenyl groups having from 3 to 30, advantageously from 3 to 10, carbon atoms, aryl, alkylaryl or haloaryl groups having from 6 to 30, preferably 6 to 10, carbon atoms, perhaloalkyl groups having from 1 to 30 carbon atoms, (perhaloalkyl)alkoxy groups having from 2 to 30 carbon atoms, perhalogenated cycloaliphatic groups having from 3 to 30 carbon atoms optionally containing heteroatoms chosen from O, S and N and/or optionally carrying at least one perhaloalkyl grouping, and perhalogenated aryl groups having from 6 to 30 atoms or
• one of R_{F1} and R'_{F} represents a polymer residue linked to Y₁ or Y₂ by a spacer group and provided that one of R_{F1} and R'_{F} represents a group chosen from perhaloalkyl groups having from 1 to 30 carbon atoms, (perhaloalkyl)alkoxy groups having from 2 to 30 carbon atoms, perhalogenated cycloaliphatic groups having from 3 to 30 carbon atoms optionally containing heteroatoms chosen from 0, S and N and/or optionally carrying at least one perhaloalkyl grouping, and perhalogenated aryl groups having from 6 to 30 atoms; or alternatively
• R_{F1} and R'_{F} form together a divalent radical chosen from perfluorinated or perchlorinated linear alkylene radicals having from 2 to 20 carbon atoms, advantageously from 2 to 8 carbon atoms; or alternatively
• when X represents C(Q)H, R'_{F} and R"_{F}, on the one hand, and/or R_{F1} and R"_{F}, on the other hand, form together a divalent radical chosen from perfluorinated or perchlorinated, linear or branched alkylene radicals having from 2 to 20, advantageously from 2 to 8, carbon atoms, and
• with the proviso that when Q represents H, then Y₁ and Y₂ are SO₂ groups.

6. Method according to Claim 5, **characterized in that** said compound of general formula (I) is chosen from the sulfonimides:
• FSO₂NHSO₂R'_{F},
• CF₃SO₂-NH-SO₂R'_{F},
• CF₃CH₂OSO₂NHSO₂R'_{F},
• (CF₃)₂CH-SO₂-NH-SO₂R'_{F}, and
• (CF₃)₂CHOSO₂NHSO₂R'_{F},
in which the radical R'_{F} is chosen from F, CF₃CH₂O, (CF₃)₂CHO, and a perfluoroalkyl group having from 1 to 20, advantageously from 1 to 10, carbon atoms, preferably -CF₃, -C₂F₅, -C₄F₉, -C₆F₁₃, -C₈F₁₇ and -C₁₀F₂₁.

7. Method according to Claim 5, **characterized in that** said compound of general formula (I) is chosen from the sulfonylmethanes:
- FSO₂C(Q)HSO₂R'_{F},
- CF₃CH₂OSO₂C (Q) HSO₂R'_{F}, and
- (CF₃) ₂CHOSO₂C (Q) HSO₂R'_{F},
in which:
• R'_{F} is chosen from F, CF₃CH₂O, (CF₃)₂CHO, and a perfluoroalkyl group having from 1 to 20, advantageously from 1 to 10 carbon atoms, preferably -CF₃, -C₂F₅, -C₄F₉, -C₆F₁₃, -C₈F₁₇ and -C₁₀F₂₁, and
• Q is chosen from H, FSO₂, CF₃CH₂O-SO₂, (CF₃)₂CH-O-SO₂, an alkyl, aryl, alkylaryl or arylalkyl group having at most 30 carbon atoms, a perfluoroalkylsulfonyl group having from 1 to 8 carbon atoms, preferably CF₃SO₂, C₂F₅SO₂, C₄F₉SO₂, C₆F₁₃SO₂ and C₈F₁₇SO₂, and a perfluoroalkyl group having from 1 to 12 carbon atoms, preferably -CF₃, -C₂F₅, -C₄F₉, - C₆F₁₃, -C₈F₁₇ and -C₁₀F₂₁; or alternatively
• Q and R'_{F} form together a perfluorinated linear divalent alkylene group having from 1 to 20, advantageously from 1 to 8, carbon atoms.

8. Method according to one of Claims 5 to 7, **characterized in that** the compound of general formula (I) is chosen from (FSO₂)₂NH; (CF₃SO₂)₂-NH; CF₃SO₂NHSO₂C₄F₉; (FSO₂)₃CH: (FSO₂)₂CH₂; (CF₃CH₂OSO₂)₂NH; [(CF₃)₂CHOSO₂]₂NH; (CF₃CH₂OSO₂)₂CH₂; [(CF₃)₂-CHO-SO₂]₂CH₂; [(CF₃)₂-CHO-SO₂]₃CH; [(CF₃)₂-CHO-SO₂]₃CH; FSO₂NHSO₂CF₃; FSO₂NHSO₂C₂F₅; (CF₃)CHO-SO₂NHSO₂CF₃; (CF₃)₂CHOSO₂NHSO₂CF₃; (CF₃)₂CHOSO₂NHSO₂C₂F₅; CF₃CH₂OSO₂NHSO₂C₂F₅ and (C₄F₉SO₂)₂-NH.

9. Method according to Claim 8, **characterized in that** the dimerization catalyst is the triflimide (CF₃SO₂)₂-NH.

10. Method according to any one of Claims 1 to 3, **characterized in that** the superacid catalyst contains at least one S(O)ₘOH functional group, m being equal to 1 or 2, linked to an electron-attracting atom or group, or a precursor of said compound.

11. Method according to Claim 10, **characterized in that** the electron-attracting atom or group is chosen from the attracting atoms or groups whose Hammett constant σₚ is at least equal to 0.1.

12. Method according to Claim 10 or 11, **characterized in that** the catalyst comprises a compound of formula (II) :
R_{F2}-S(O)ₘOH (II)
in which R_{F2} represents an electron-attracting atom or group and m represents 1 or 2.

13. Method according to Claim 12, **characterized in that** the catalyst comprises a compound of formula (II) in which R_{F2} is chosen from preferably light halogen atoms, in particular fluorine and chlorine, and from preferably C₁-C₆ hydrocarbon groups containing at least one halogen atom, preferably chosen from fluorine and chlorine.

14. Method according to Claim 12 or 13, **characterized in that** the catalyst comprises a compound of formula (II) in which R_{F2} corresponds to the following general formula (II'):
-(CR₁R₂)ₚ-GEA (II')
in which
R₁ and R₂, which are identical or different, are chosen from a hydrogen atom, a halogen atom, in particular a fluorine atom, a C₁-C₆ alkyl group, a group -NO₂, -CN, -COOH or -COOR₃ where R₃ is a C₁-C₆ alkyl group, a C₁-C₂₀ perfluoroalkyl or C₆-C₂₀ perfluoroaryl group,
p represents an integer between 0 and 2,
the symbol GEA represents the hydrogen atom, a halogen atom, in particular a fluorine atom, a C₁-C₆ alkyl, C₆-C₁₂ aryl, (C₁-C₂)alkyl (C₆-C₁₂) aryl group, optionally substituted with one or more electron-attracting groups or atoms, or one electron-attracting group, with the proviso that the Hammett constant for the group -(CR₁R₂)ₚ-GEA is at least equal to 0.1.

15. Method according to one of Claims 12 to 14, **characterized in that** the symbols R₁ and R₂, which are identical or different, represent a fluorine atom or a group CₙF₂ₙ₊₁, with n being an integer between 1 and 20, and GEA advantageously represents a fluorine atom or a perfluorinated residue of formula CₙF₂ₙ₊₁, with n as defined above.

16. Method according to any one of Claims 10 to 15, **characterized in that** said electron-attracting atom or group is chosen from:
F, CH₂F, CHF₂, CF₃, CH₂-CH₂F, CH₂-CHF₂, CH₂-CF₃, CHF-CH₂F₂, CHF-CHF₂, CHF-CF₃, CF₂₇CH₃, CF₂-CH₂F, CF₂-CHF₂, CF₂-CF₃, CH₂-CH₂-CH₂F, CH₂-CH₂-CHF₂, CH₂-CH₂-CF₃, CH₂-CHF-CH₃, CH₂-CHF-CH₂F, CH₂-CHF-CHF₂, CH₂-CHF-CF₃, CH₂-CF₂-CH₃, -CH₂-CF₂-CH₂F, CH₂-CF₂-CHF₂, CH₂-CF₂-CF₃, CHF-CH₂-CH₃, CHF-CH₂-CH₂F, CHF-CH₂-CHF₂, CHF-CH₂-CF₃, CHF-CHF-CH₃, CHF-CHF-CH₂F, CHF-CHF-CHF₂, CHF-CHF-CF₃, CHF-CF₂-CH₃, CHF-CF₂-CH₂F, CHF-CF₂-CHF₂, CHF-CF₂-CF₃, CF₂-CH₂-CH₃, CF₂-CH₂-CH₂F, CF₂-CH₂-CHF₂, CF₂-CH₂-CF₃, CF₂-CHF-CH₃, CF₂-CHF-CH₂F, CF₂-CHF-CHF₂, CF₂-CHF-CF₃, CF₂-CF₂-CH₃, CF₂-CF₂-CH₂F, CF₂-CF₂-CHF₂, CF₂-CF₂-CF₃, and the groups 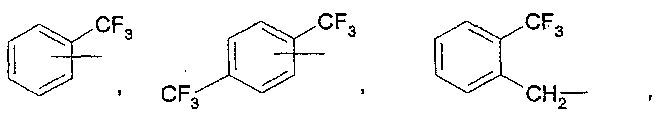 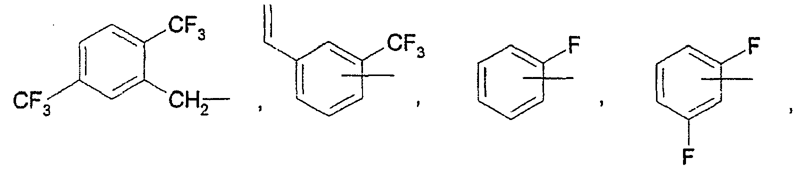 and the corresponding groups in which the fluorine atom is replaced by a chlorine atom.

17. Method according to Claim 10, **characterized in that** m is equal to 2.

18. Method according to any one of Claims 10 to 17, **characterized in that** the dimerization catalyst is the triflic acid CF₃SO₃H.

19. Method according to one of the preceding claims, for the cyclodimerization of monomers in which at least one isocyanate functional group is at the cycloaliphatic, secondary, tertiary or neopentyl position.

20. Method according to Claim 19, **characterized in that** the starting monomer is IPDI.

21. Method according to one of the preceding claims, **characterized in that** the catalyst/NCO molar ratio is at least 10⁻⁵ and at most 10⁻¹.

22. Method according to Claim 21, **characterized in that** the Y₁-X-Y₂/NCO functional group molar ratio is at least 10⁻⁴, advantageously at least 10⁻³.

23. Method according to Claim 22, **characterized in that** the Y₁-X-Y₂/NCO functional group molar ratio is at most 10⁻¹, advantageously at most 5×10⁻².

24. Method according to Claim 21, **characterized in that** the molar ratio of the S(O)ₘOH functional groups relative to the NCO functional groups of the catalyst is between 6×10⁻⁴ and 1.5×10⁻².

25. Method according to any one of the preceding claims, **characterized in that** an alcohol is added to the reaction medium so as to form allophanates in addition to the dimers.

26. Method according to any one of the preceding claims, **characterized in that** a polyol is added to the reaction medium so as to form crosslinked dimers.

## Patentansprüche

1. Verfahren zur Herstellung von Polyisocyanaten durch Cyclodimerisation von Isocyanat-Funktionen an monomeren Ausgangscyanaten, **dadurch gekennzeichnet, dass** es die folgenden Schritte umfasst:
a. Bereitstellen eines Reaktionsmediums, das monomere Ausgangsisocyanate umfasst, gegebenenfalls in Gegenwart eines Lösungsmittels;
b. Zugabe zu diesem Reaktionsmedium eines (Cyclo)dimerisationskatalysators, dessen nach Hammett definierte Säurekonstante streng unter -12 liegt und der eine Verbindung aus der Familie der Supersäuren einschließt;
c. Erwärmen des Reaktionsmediums auf eine Temperatur von 0 bis 300 °C, zweckmäßigerweise von 20 bis 200 °C, bis zum Erhalt eines gewünschten Umwandlungsgrades von 1 bis 95 %, zweckmäßigerweise von 5 bis 50 % der Isocyanat-Ausgangsfunktionen;
d. gegebenenfalls Inaktivierung oder Entfernung des Reaktionskatalysators; und
e. gegebenenfalls Entfernung der Monomere, die nicht reagiert haben.

2. Verfahren nach Anspruch 1, **dadurch gekennzeichnet, dass** der Katalysator eine Supersäure ist, die aus Sulfonsäuren, Sulfonamiden, Sulfonylmethanen, allein oder im Gemisch, sowie ihren Derivaten ausgewählt ist.

3. Verfahren nach Anspruch 2, **dadurch gekennzeichnet, dass** der Katalysator ferner eine Säure umfasst, die aus Phosphorfluoriden, Antimonfluoriden, Borfluoriden (und -hydrofluoriden) etc., allein oder im Gemisch, sowie aus ihren Derivaten ausgewählt ist.

4. Verfahren nach einem der vorhergehenden Ansprüche, **dadurch gekennzeichnet, dass** der Katalysator eine Verbindung aus der Familie der Supersäuren ist, die mindestens eine bivalente Gruppe -Y₁-X-Y₂-, die an ein Atom oder eine Gruppe gebunden ist, die elektronenziehend sind, umfasst, wobei:
• X aus NH und C(Q)H ausgewählt ist;
• Y₁ und Y₂, gleich oder verschieden, aus der Gruppe SO₂ und der Gruppe CO ausgewählt sind;
• Q ausgewählt ist aus:
* H, Cl, F, Br, CN;
* einem Alkylrest mit 1 bis 30 Kohlenstoffatomen;
* einem Aryl- oder Aralkylrest mit 6 bis 30 Kohlenstoffatomen;
* einer Gruppe R"_{F}, einer Gruppe R"_{F}SO₂- oder R"_{F}CO-, einer Gruppe R"_{F}CH₂OSO₂- oder R"_{F}CH₂OCO- und einer Gruppe (R"_{F})₂CHO-SO₂-oder (R"_{F})₂CH₂O-CO-; wobei R"_{F} aus der Gruppe ausgewählt ist, bestehend aus Fluor, Chlor, Brom, der Gruppe -CN, den Alkyl-, Alkenyl-, Halogenalkyl-, Halogenalkenyl-, Halogencycloalkyl- oder Halogencycloalkenylgruppen mit 1 bis 20, vorzugsweise 1 bis 6 Kohlenstoffatomen, den Cycloalkyl-, Cycloalkenyl-, Halogencycloalkyl- oder Halogencycloalkenylgruppen mit 3 bis 30, zweckmäßigerweise 3 bis 10 Kohlenstoffatomen, den Aryl-, Alkylaryl- oder Halogenarylgruppen mit 6 bis 30, vorzugsweise 6 bis 10 Kohlenstoffatomen, den Perhalogenalkylgruppen mit 1 bis 30 Kohlenstoffatomen, den (Perhalogenalkyl)alkoxygruppen mit 2 bis 30 Kohlenstoffatomen, den perhalogenierten cycloaliphatischen Gruppen mit 3 bis 30 Kohlenstoffatomen, die gegebenenfalls Heteroatome, ausgewählt aus O, S und N, enthalten und/oder gegebenenfalls mindestens eine Perhalogenalkylkette tragen, und den perhalogenierten Arylgruppen mit 6 bis 30 Atomen;
* mit der Maßgabe, dass, wenn Q H darstellt, Y₁ und Y₂ jeweils die Gruppe -SO₂- darstellen.

5. Verfahren nach einem der vorhergehenden Ansprüche, **dadurch gekennzeichnet, dass** der (Cyclo)dimerisationskatalysator eine Verbindung der Formel (I) umfasst:
R_{F}-Y₁-X-Y₂-R'_{F} (I)
wobei:
• X aus NH und C(Q)H ausgewählt ist;
• Y₁ und Y₂, gleich oder verschieden, aus der Gruppe SO₂ und der Gruppe CO ausgewählt sind;
• Q ausgewählt ist aus:
* H, Cl, F, Br, CN;
* einem Alkylrest mit 1 bis 30 Kohlenstoffatomen;
* einem Aryl- oder Aralkylrest mit 6 bis 30 Kohlenstoffatomen;
* einer Gruppe R"_{F}, einer Gruppe R"_{F}SO₂- oder R"_{F}CO-, einer Gruppe R"_{F}CH₂OSO₂- oder R"_{F}CH₂OCO- und einer Gruppe (R"_{F})₂CHO-SO₂-oder (R"_{F})₂CH₂O-CO-; wobei R"_{F} aus der Gruppe ausgewählt ist, bestehend aus Fluor, Chlor, Brom, der Gruppe -CN, den Alkyl-, Alkenyl-, Halogenalkyl-, Halogenalkenyl-, Halogencycloalkyl- oder Halogencycloalkenylgruppen mit 1 bis 20, vorzugsweise 1 bis 6 Kohlenstoffatomen, den Cycloalkyl-, Cycloalkenyl-, Halogencycloalkyl- oder Halogencycloalkenylgruppen mit 3 bis 30, zweckmäßigerweise 3 bis 10 Kohlenstoffatomen, den Aryl-, Alkylaryl- oder Halogenarylgruppen mit 6 bis 30, vorzugsweise 6 bis 10 Kohlenstoffatomen, den Perhalogenalkylgruppen mit 1 bis 30 Kohlenstoffatomen, den (Perhalogenalkyl)alkoxygruppen mit 2 bis 30 Kohlenstoffatomen, den perhalogenierten cycloaliphatischen Gruppen mit 3 bis 30 Kohlenstoffatomen, die gegebenenfalls Heteroatome, ausgewählt aus O, S und N, enthalten und/oder gegebenenfalls mindestens eine Perhalogenalkylkette tragen, und den perhalogenierten Arylgruppen mit 6 bis 30 Atomen;
* mit der Maßgabe, dass, wenn Q H darstellt, Y₁ und Y₂ jeweils die Gruppe -SO₂- darstellen, R_{F} aus R_{F1}, R_{F1}CH₂O-; und (R_{F1})₂CHO- ausgewählt ist;
• R_{F1} und R'_{F}, gleich oder verschieden, aus der Gruppe ausgewählt sind, bestehend aus Fluor, Chlor, Brom, der Gruppe CN, den Alkyl-, Alkenyl-, Halogenalkyl-, Halogenalkenyl-, Halogencycloalkyl- oder Halogencycloalkenylgruppen mit 1 bis 20, vorzugsweise 1 bis 6 Kohlenstoffatomen, den Cycloalkyl-, Cycloalkenyl-, Halogencycloalkyl- oder Halogencycloalkenylgruppen mit 3 bis 30 Kohlenstoffatomen, zweckmäßigerweise mit 3 bis 10 Kohlenstoffatomen, den Aryl-, Alkylaryl- oder Halogenarylgruppen mit 6 bis 30, vorzugsweise 6 bis 10 Kohlenstoffatomen, den Perhalogenalkylgruppen mit 1 bis 30 Kohlenstoffatomen, den (Perhalogenalkyl)alkoxygruppen mit 2 bis 30 Kohlenstoffatomen, den cycloaliphatischen perhalogenierten Gruppen mit 3 bis 30 Kohlenstoffatomen, die gegebenenfalls Heteroatome enthalten, die aus O, S und N ausgewählt sind und/oder mindestens eine Perhalogenalkylkette tragen, und den perhalogenierten Arylgruppen mit 6 bis 30 Kohlenstoffatomen; oder
• eines von R_{F1} und R'_{F} einen polymeren Rest darstellt, der an Y₁ oder Y₂ über eine Spacergruppe gebunden ist, und mit der Maßgabe, dass eines von R_{F1} und R'_{F} eine Gruppe darstellt, ausgewählt aus den Perhalogenalkylgruppen mit 1 bis 30 Kohlenstoffatomen, den (Perhalogenalkyl)alkoxygruppen mit 2 bis 30 Kohlenstoffatomen, den cycloaliphatischen perhalogenierten Gruppen mit 3 bis 30 Kohlenstoffatomen, die gegebenenfalls Heteroatome, ausgewählt aus O, S und N enthalten, und/oder gegebenenfalls mindestens eine Perhalogenalkylkette tragen, und den perhalogenierten Arylgruppen mit 6 bis 30 Kohlenstoffatomen; oder
• R_{F1} und R'_{F} zusammen einen zweiwertigen Rest bilden, ausgewählt aus perfluorierten oder perchlorierten linearen Alkylenresten mit 2 bis 20 Atomen, zweckmäßigerweise mit 2 bis 8 Kohlenstoffatomen; oder
• wenn X C(Q)H darstellt, R'_{F} und R"_{F} zum einen und/oder R_{F1} und R"_{F} zum anderen zusammen einen zweiwertigen Rest bilden, der aus linearen oder verzweigten perfluorierten oder perchlorierten Alkylenresten mit 2 bis 20, zweckmäßigerweise 2 bis 8 Kohlenstoffatomen ausgewählt ist, und
• mit der Maßgabe, dass, wenn Q H darstellt, Y₁ und Y₂ dann SO₂-Gruppen sind.

6. Verfahren nach Anspruch 5, **dadurch gekennzeichnet, dass** die Verbindung der allgemeinen Formel (I) ausgewählt ist aus den Sulfonimiden:
• FSO₂NHSO₂R'_{F},
• CP₃SO₂-NH-SO₂R'_{F}.
• CF₃CH₂OSO₂NHSO₂R'_{F},
• (CF₃)₂CH-SO₂-NH-SO₂R'_{F}, und
• (CF₃)₂CHOSO₂NHSO₂R'_{F},
wobei der Rest R'_{F} aus F, CF₃CH₂O, (CF₃)₂CHO ausgewählt ist, und einer Perfluoralkylgruppe mit 1 bis 20, zweckmäßigerweise mit 1 bis 10 Kohlenstoffatomen, vorzugsweise -CF₃, -C₂F₅, -C₄F₉, -C₆F₁₃, -C₈F₁₇ und -C₁₀F₂₁.

7. Verfahren nach Anspruch 5, **dadurch gekennzeichnet, dass** die Verbindung der allgemeinen Formel (I) ausgewählt ist aus den Sulfonylmethanen:
• FSO₂C(Q)HSO₂R'_{F},
• CF₃CH₂OSO₂C(Q)HSO₂R'_{F}, und
• (CF₃)₂CHOSO₂C(Q)HSO₂R'_{F},
wobei
- R'_{F} aus F, CF₃CH₂O, (CF₃)₂CHO ausgewählt ist, und aus einer Perfluoralkylgruppe mit 1 bis 20, zweckmäßigerweise 1 bis 10 Kohlenstoffatomen, vorzugsweise -CF₃, -C₂F₅, -C₄F₉, -C₆F₁₃, -C₈F₁₇ und - C₁₀F₂₁, und
- Q ausgewählt ist aus H, FSO₂, CF₃CH₂O-SO₂, (CF₃)₂CH-O-SO₂, einer Alkyl-, Aryl-, Alkylaryl- oder Arylalkylgruppe mit höchstens 30 Kohlenstoffatomen, einer Perfluoralkylsulfonylgruppe mit 1 bis 8 Kohlenstoffatomen, vorzugsweise CF₃SO₂, C₂F₅SO₂, C₄F₉SO₂, C₆F₁₃SO₂ und C₈F₁₇SO₂, und einer Perfluoralkylgruppe mit 1 bis 12 Kohlenstoffatomen, vorzugsweise -CF₃, -C₂F₅, -C₄F₉, -C₆F₁₃, -C₈F₁₇ und -C₁₀F₂₁ ausgewählt ist; oder
- Q und R'_{F} zusammen eine zweiwertige lineare perfluorierte Alkylengruppe mit 1 bis 20, zweckmäßigerweise 1 bis 8 Kohlenstoffatomen bilden.

8. Verfahren nach einem der Ansprüche 5 bis 7, **dadurch gekennzeichnet, dass** die Verbindung der allgemeinen Formel (I) ausgewählt ist aus (FSO₂)₂NH;
(CF₃SO₂)₂-NH ; CF₃SO₂NHSO₂C₄F₉ ; (FSO₂)₃CH ; (FSO₂)₂CH₂ ; (CF₃CH₂OSO₂)₂NH ; [(CF₃)₂CHOSO₂]₂NH ; (CF₃CH₂OSO₂)₂CH₂ ;[(CF₃)₂-CHO-SO₂]₂CH₂ ;[(CF₃)₂-CHO-SO₂]₃CH ;[(CF₃)₂-CHO-SO₂]₃CH ; FSO₂NHSO₂CF₃ ; FSO₂NHSO₂C₂F₅ ;(CF₃)CHO-SO₂NHSO₂CF₃ ; (CF₃)₂CHOSO₂NHSO₂CF₃ ; (CF₃)₂CHOSO₂NHSO₂C₂F₅ ; CP₃CH₂OSO₂NHSO₂C₂F₅ und (C₄F₉SO₂)₂-NH.

9. Verfahren nach Anspruch 8, **dadurch gekennzeichnet, dass** der Dimerisationskatalysator Triflimid (CF₃SO₂)₂NH ist.

10. Verfahren nach einem der Ansprüche 1 bis 3, **dadurch gekennzeichnet, dass** der Supersäure-Katalysator mindestens eine Funktion S(O)ₘOH, wobei m gleich 1 oder 2 ist, die an ein Atom oder eine Gruppe gebunden ist, die elektronenziehend sind, oder einen Vorläufer der Verbindung umfasst.

11. Verfahren nach Anspruch 10, **dadurch gekennzeichnet, dass** das elektronenziehende Atom oder die elektronenziehende Gruppe aus den elektronenziehenden Atomen oder Gruppen ausgewählt ist, deren Hammett-Konstante σₚ mindestens 0,1 entspricht.

12. Verfahren nach Anspruch 10 oder 11, **dadurch gekennzeichnet, dass** der Katalysator eine Verbindung der Formel (II) umfasst:
R_{F2}-S(O)mOH (II)
wobei R_{F2} ein elektronenziehendes Atom oder eine elektronenziehende Gruppe darstellt und m 1 oder 2 darstellt.

13. Verfahren nach Anspruch 12, **dadurch gekennzeichnet, dass** der Katalysator eine Verbindung der Formel (II) umfasst, wobei R_{F2} ausgewählt ist aus Halogenatomen, vorzugsweise aus den leichten Halogenatomen, insbesondere Fluor und Chlor, und aus den Kohlenwasserstoffgruppen, vorzugsweise den C₁-C₆-Kohlenwasserstoffgruppen, die mindestens ein Halogenatom umfassen, das vorzugsweise aus Fluor oder Chlor ausgewählt ist.

14. Verfahren nach Anspruch 12 oder 13, **dadurch gekennzeichnet, dass** der Katalysator eine Verbindung der Formel (II) umfasst, wobei R_{F2} der folgenden allgemeinen Formel (II') gehorcht:
-(CR₁R₂)ₚ-GEA (II')
wobei R₁ und R₂, gleich oder verschieden, ausgewählt sind aus einem Wasserstoff-, Halogen-, insbesondere einem Fluoratom, einer C₁-C₆-Alkylgruppe, einer Gruppe - NO₂, -CN, -COOH, -COOR₃, wobei R₃ eine C₁-C₆-Alkylgruppe, eine C₁-C₂₀-Perfluoralkylgruppe oder eine C₆-C₂₀-Perfluorarylgruppe ist,
p eine ganze Zahl von 0 bis 2 ist,
das Symbol GEA das Wasserstoffatom, ein Halogenatom, insbesondere Fluor, eine C₁-C₆-Alkylgruppe, C₆-C₁₂-Arylgruppe, (C₁-C₂)-Alkyl-(C₆-C₁₂)-arylgruppe, die gegebenenfalls mit einer oder mehreren elektronenziehenden Gruppen oder Atomen substituiert ist, oder eine elektronenziehende Gruppe darstellt, mit der Maßgabe, dass die Hammett-Konstante der Gruppe -(CR₁R₂)ₚ-GEA mindestens gleich 0,1 ist.

15. Verfahren nach einem der Ansprüche 12 bis 14, **dadurch gekennzeichnet, dass** die Symbole R₁ und R₂, gleich oder verschieden, ein Fluoratom oder eine Gruppe CₙF₂ₙ₊₁ darstellen, wobei n eine ganze Zahl von 1 bis 20 ist und GEA zweckmäßigerweise ein Fluoratom oder einen perfluorierten Rest der Formel CₙF₂ₙ₊₁, wobei n wie zuvor definiert ist, darstellt.

16. Verfahren nach einem der Ansprüche 10 bis 15, **dadurch gekennzeichnet, dass** das elektronenziehende Atom oder die elektronenziehende Gruppe ausgewählt ist aus:
F, CH₂F, CHF₂, CF₃, CH₂-CH₂F, CH₂-CHF₂, CH₂-CF₃, CHF-CH₂F₂, CHF-CHF₂, CHF-CF₃, CF₂-CH₃, CF₂-CH₂F, CF₂-CHF₂, CF₂-CF₃, CH₂-CH₂-CH₂F, CH₂-CH₂-CHF₂, CH₂-CH₂-CF₃, CH₂-CHF-CH₃, CH₂-CHF-CH₂F, CH₂-CHF-CHF₂, CH₂-CHF-CF₃, CH₂-CF₂-CH₃, -CH₂-CF₂-CH₂F, CH₂-CF₂-CHF₂, CH₂-CF₂-CF₃, CHF-CH₂-CH₃, CHF-CH₂-CH₂F, CHF-CH₂-CHF₂, CHF-CH₂-CF₃, CHF-CHF-CH₃, CHF-CHF-CH₂F, CHF-CHF-CHF₂, CHF-CHF-CF₃, CHF-CF₂-CH₃, CHF-CF₂-CH₂F, CHF-CF₂-CHF₂, CHF-CF₂-CF₃, CF₂-CH₂-CH₃, CF₂-CH₂-CH₂F, CF₂-CH₂-CHF₂, CF₂-CH₂-CF₃, CF₂-CHF-CH₃, CF₂-CHF-CH₂F, CF₂-CHF-CHF₂, CF₂-CHF-CF₃, CF₂-CF₂-CH₃, CF₂-CF₂-CH₂F, CF₂-CF₂-CHF₂, CF₂-CF₂-CF₃,
und den Gruppen 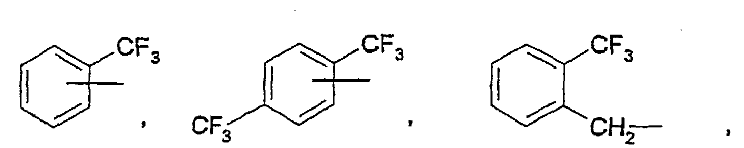 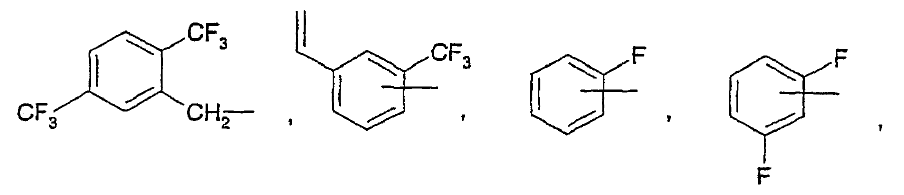 sowie den entsprechenden Gruppen, in denen das Fluoratom durch ein Chloratom ersetzt ist.

17. Verfahren nach Anspruch 10, **dadurch gekennzeichnet, dass** m gleich 2 ist.

18. Verfahren nach einem der Ansprüche 10 bis 17, **dadurch gekennzeichnet, dass** der Dimerisationskatalysator Triflicsäure CF₃SO₃H ist.

19. Verfahren nach einem der vorhergehenden Ansprüche zur Cyclodimerisation von Monomeren, wovon mindestens eine Isocyanatfunktion sich in cycloaliphatischer, sekundärer, tertiärer oder neopentylischer Position befindet.

20. Verfahren nach Anspruch 19, **dadurch gekennzeichnet, dass** das Ausgangsmonomer IPDI ist.

21. Verfahren nach einem der vorhergehenden Ansprüche, **dadurch gekennzeichnet, dass** das Molverhältnis Katalysator/NCO mindestens 10⁻⁵ und höchstens 10⁻¹ beträgt.

22. Verfahren nach Anspruch 21, **dadurch gekennzeichnet, dass** das Molverhältnis der Funktionen Y₁-X-Y₂/NCO mindestens 10⁻⁴, zweckmäßigerweise 10⁻³ beträgt.

23. Verfahren nach Anspruch 22, **dadurch gekennzeichnet, dass** das Molverhältnis der Funktionen Y₁-X-Y₂/NCO höchstens 10⁻¹, zweckmäßigerweise höchstens 5.10⁻² beträgt.

24. Verfahren nach Anspruch 21, **dadurch gekennzeichnet, dass** das Molverhältnis der Funktionen S(O)ₘOH bezüglich der Funktionen NCO des Katalysators 6.10⁻⁴ bis 1,5.10⁻² beträgt.

25. Verfahren nach einem der vorhergehenden Ansprüche, **dadurch gekennzeichnet, dass** dem Reaktionsmedium ein Alkohol so zugesetzt wird, dass Allophanate zusätzlich zu Dimeren gebildet werden.

26. Verfahren nach einem der vorhergehenden Ansprüche, **dadurch gekennzeichnet, dass** dem Reaktionsmedium ein Polyol so zugesetzt wird, dass vernetzte Dimere gebildet werden.
